(19) Europäisches Patentamt
European Patent Office
Office européen des brevets

(11) **EP 2 096 578 A2**

(12) **EUROPÄISCHE PATENTANMELDUNG**

(43) Veröffentlichungstag:
**02.09.2009 Patentblatt 2009/36**

(51) Int Cl.:
***G06K 9/46*** *(2006.01)* ***G07D 7/00*** *(2006.01)*

(21) Anmeldenummer: **08171465.1**

(22) Anmeldetag: **12.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **01.03.2008 DE 102008012152**

(71) Anmelder: **Voith Patent GmbH 89522 Heidenheim (DE)**

(72) Erfinder:
• **Dr. Bauer, Armin 3100, St. Pölten (AT)**
• **Kiniger, Marianne 1140, Wien (AT)**

(54) **Verfahren und Vorrichtung zur Charakterisierung der Formation von Papier**

(57) Bei einem Verfahren zur Charakterisierung der Formation von Papier mittels wenigstens einer Bildverarbeitungsmethode werden im Papier vorhandene Muster und/oder Strukturen automatisch charakterisiert und klassifiziert, wobei die automatische Charakterisierung und Klassifizierung die folgenden Schritte umfasst: Erstellen einer Papierprobensammlung, Erstellen einer digitalen Aufnahme von jeder einzelnen Probe, gegebenenfalls ein digitales Vorverarbeiten der digitalen Aufnahme, Berechnen von unterschiedlichen multidimensionalen Features anhand der digitalen Aufnahmen oder Teilbereichen der Aufnahmen, Analysieren von sich bei der Berechnung der unterschiedlichen multidimensionalen Features im Featureraum bildenden strukturspezifischen Gruppierungen und Analysieren der strukturspezifischen Gruppierungen im Featureraum, Projizieren des Ergebnisses der Analyse der strukturspezifischen Gruppierungen in einen im Vergleich zum Featureraum niedrigdimensionalen Raum zur Visualisierung des Analyseergebnisses, und Heranziehen des Analyseergebnisses zur Klassifikation von neu hinzugekommen Proben. Dabei erfolgt die Berechnung der unterschiedlichen multidimensionalen Features anhand der digitalen Aufnahmen oder Teilbereichen der Aufnahmen auf der Basis wenigstens einer der folgenden Algorithmen: Relationale Kernfunktion (RKF), Phasenbasierende Methode, 2-Punkt- oder 3-Punkt-Methode, Wavelets.

Fig. 6

**Beschreibung**

Die Erfindung betrifft ein Verfahren zur Charakterisierung der Formation von Papier mittels wenigstens einer Bildverarbeitungsmethode, bei dem im Papier vorhandene Muster und/oder Strukturen automatisch charakterisiert und klassifiziert werden, wobei die automatische Charakterisierung und Klassifizierung die folgenden Schritte umfasst: Erstellen einer Papierprobensammlung, Erstellen einer digitalen Aufnahme von jeder einzelnen Probe, gegebenenfalls ein digitales Vorverarbeiten der digitalen Aufnahme, Berechnen von unterschiedlichen multidimensionalen Features anhand der digitalen Aufnahmen oder Teilbereichen der Aufnahmen, Analysieren von sich bei der Berechnung der unterschiedlichen multidimensionalen Features im Featureraum bildenden strukturspezifischen Gruppierungen und Analysieren der strukturspezifischen Gruppierungen im Featureraum, Projizieren des Ergebnisses der Analyse der strukturspezifischen Gruppierungen in einen im Vergleich zum Featureraum niedrigdimensionalen Raum zur Visualisierung des Analyseergebnisses, und Heranziehen des Analyseergebnisses zur Klassifikation von neu hinzugekommenen Proben. Sie betrifft ferner eine Vorrichtung zur Charakterisierung der Formation von Papier gemäß dem Oberbegriff des Anspruchs 10.

Die Formation von Papier entsteht durch geringe unregelmäßige Abweichungen des Flächengewichts aufgrund von Verflockungen der Fasern.

Die Qualitätsparameter des produzierten Papiers, wie zum Beispiel die Bedruckbarkeit, Reißlänge, Porosität, und andere, hängen zu einem großen Teil von der Formation ab. Üblicherweise wird die Formation objektiv über einen Index, zum Beispiel "Ambertec", oder subjektiv am Lichttisch bewertet.

Eine weitere Möglichkeit zur Charakterisierung der Formation von Papier besteht in der automatischen Charakterisierung mittels einer Muster- und Strukturerkennung (vergleiche beispielsweise WO 2004/023398 A1). Dabei werden durch die Anwendung bestimmter Klassifizierungsalgorithmen verschiedene Formationsbereiche objektiv anhand ihrer charakteristischen Struktur unterschieden.

Die Vorgehensweise für eine solche automatische Charakterisierung und Klassifizierung von Mustern ist im Prinzip beispielsweise aus der WO 2004/023398 A1 bekannt. Sie umfasst üblicherweise die folgenden Schritte:

1. Probensammlung:

Erstellen einer Probensammlung, auch Trainingsmenge genannt, die möglichst viele verschiedene Texturtypen in einer repräsentativen Anzahl enthält.

2. Digitalisierung:

Von jeder einzelnen Probe wird eine digitale Aufnahme erstellt.

3. Extraktion von Features:

Aus den Aufnahmen werden verschiedene multidimensionale Features berechnet. Die Features werden aus Algorithmen gewonnen, die auf die Aufnahme selbst oder auf Teilbereiche der Aufnahme angewendet werden. Die Wahl der Features ist für den Strukturerkennungsprozess von entscheidender Bedeutung. Geeignete Features ermöglichen im Vergleich zu den Originalaufnahmen eine bessere Unterscheidbarkeit zwischen den in der Probensammlung auftretenden Strukturen. Features von ähnlichen Strukturen haben im hochdimensionalen Featureraum einen geringeren Abstand, während sich Features von verschiedenen Strukturen in großem Abstand zueinander befinden. Auf diese Weise bilden sich strukturspezifische Gruppierungen im Featureraum, das heißt so genannte Strukturcluster.

4. Analyse der Clusterbildung:

Die multidimensionalen Features dienen als Eingabeparameter für einen

Algorithmus, mit dessen Hilfe erkannt werden kann, ob sich Gruppierungen beziehungsweise Cluster im hochdimensionalen Featureraum bilden.

5. Visualisierung:

Anschließend wird das Ergebnis der Clusteranalyse in einen niedrigdimensionalen Raum unter möglichst großer Einhaltung der Gruppierung projiziert, wobei die Gruppierung erhalten bleibt. Das bedeutet, dass einerseits der Abstand von Proben mit ähnlichen Features in der niedrigdimensionalen Projektion gering ist und andererseits jener von Proben mit stark unterschiedlichen Features groß ist. Ein derartiger Algorithmus ist beispielsweise eine Selbstorganisierende Karte (SOM = Self Organizing

Map). Die Projektion ermöglicht auch eine sehr gute Visualisierung des Ergebnisses der Clusteranalyse.

6. Zuordnung von neu hinzugekommenen Proben:

Das Ergebnis der Clusteranalyse kann zur Klassifikation von neu hinzugekommenen Proben herangezogen werden. Man spricht auch von einem Training des Klassifikators. Eine neue Probe, deren Feature berechnet wurde, kann einem bestimmten Cluster zugeordnet und somit klassifiziert werden.

7. Zuordnung von Proben zu einer definierten Klasse (optional):

Durch eine entweder vor oder nach der Analyse durchgeführte Definition von

Klassen, denen die Proben angehören, kann der Klassifikator erweitert werden. Eine neu hinzugekommene Probe kann aufgrund der Klassenzugehörigkeit jener Proben aus der Trainingsmenge, die einen Cluster bilden, klassifiziert werden.

8. Anpassen des Klassifikators (optional):

Eine neu hinzugekommene Probe kann zu der Trainingsmenge hinzugefügt werden. Durch ein erneutes Training des Klassifikators kann dieser soweit angepasst werden, dass eventuell auftretende Formationsstrukturen, die in der ursprünglichen Trainingsmenge nicht enthalten waren, klassifiziert werden können.

Bei dem aus der WO 2004/023398 A1 bekannten Verfahren zur Charakterisierung der Formation von Papier werden in dem zuvor genannten Schritt 3 (Extraktion von Features) des Charakterisierungsprozesses so genannte Local Binary Patterns (LBPs) in verschiedener Ausprägung verwendet.

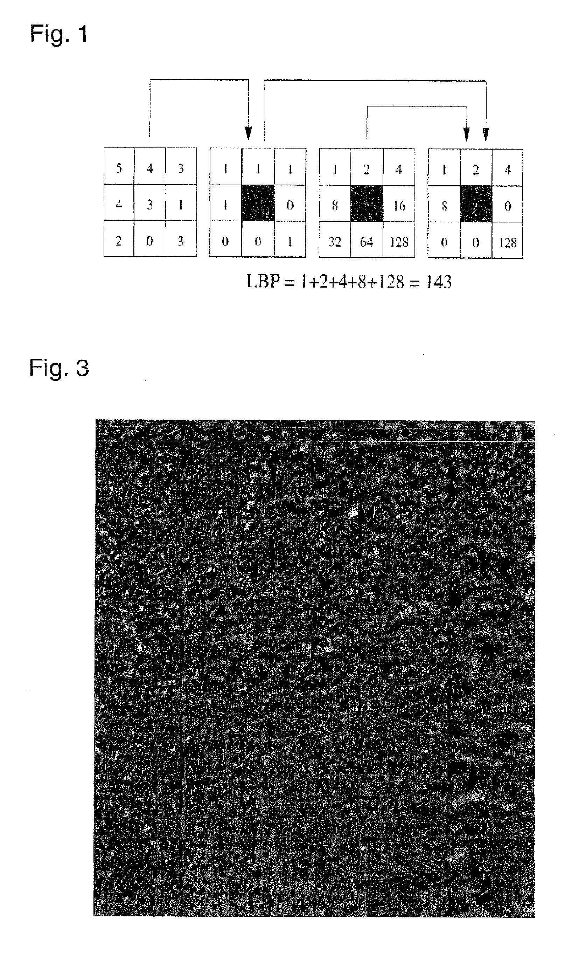

Dabei werden zur Berechnung des LBP-Texturmerkmals die Pixel in einer definierten Nachbarschaft um einen zentralen Bildpunkt untersucht. Hierbei werden die Grauwertunterschiede zwischen dem zentralen Bildpunkt und dessen Nachbarschaftspixel vereinfacht in Binärzahlen zusammengefasst. Ein Beispiel für diese bekannte Berechnungsmethode ergibt sich aus der Fig. 1. Dabei erfolgt die Berechnung der Binärzahlen nach der folgenden Beziehung:

$$LBP(m) = \sum_{i=1}^{8} \kappa(m_i) 2^{i-1}, \kappa(m_i) = \begin{cases} 1, & \text{für } m_i \geq m_0 \\ 0, & \text{sonst} \end{cases}$$

$$m = (m_0, m_1, ..., m_8)^T$$

Bei dem in der Fig. 1 wiedergegebenen Fall wird der Mittelpunkt der 3 x 3-Nachbarschaft (hier Wert 3) mit den ihn umgebenden Bildpunkten verglichen und als Binärzahl codiert.

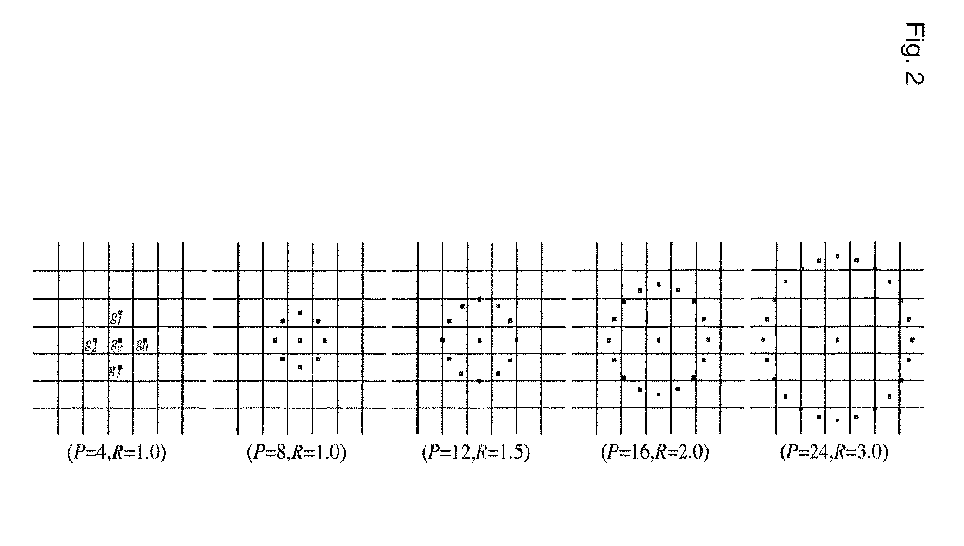

Wie sich aus der Fig. 2 ergibt, kann die ursprüngliche 3 x 3-Umgebung jedes Bildpunkts auf beliebig große Nachbarschaften erweitert werden. Dabei zeigt die Fig. 2 Beispiele für die Erweiterung des LBP-Operators auf beliebig große Radien R. Grauwerte der kreisförmigen Nachbarschaft, die nicht genau auf das Zentrum eines Pixels fallen, werden interpoliert. Es existieren verschiedene Varianten des LBP-Operators, zu denen beispielsweise eine rotationsinvariante Ausprägung zählt.

Fig. 3 zeigt das Ergebnis der bekannten Clusterbildung aufgrund der verschiedenen Formationstypen unter Verwendung von Local Binary Patterns (LBPs) anhand einer Selbstorganisierenden Karte (SOM). Dabei liegt gemäß Fig. 3 im vorliegenden Fall eine reduzierte Darstellung einer Selbstorganisierenden Karte (SOM) vor, bei der von 625 Knoten einer Selbstorganisierenden Karte (SOM) mit jeweils 25 Reihen und Spalten 25 Knoten ausgewählt wurden, die sich in einem regelmäßigen Abstand zueinander befinden. Jeder dargestellte Knoten wird durch eine Papierprobe aus der Trainingsmenge repräsentiert. Als Featurealgorithmus diente hier, wie bereits erwähnt, ein Local Binary Pattern (LBP).

Ein wichtiges Ziel der Formationsanalyse ist eine Voraussage von eng mit der Formation verbundenen Papiereigenschaften, wie etwa der Bedruckbarkeit oder der Porosität, anhand der Formation.

In die niedrigdimensionale Projektion des Featureraumes können nun auch die entsprechenden, beispielsweise im Labor gemessenen Qualitätsparameter eingetragen werden. Dadurch lässt sich untersuchen, ob innerhalb eines mit der Selbstorganisierenden Karte (SOM) ermittelten Clusters ähnliche Werte der Qualitätsparameter auftreten.

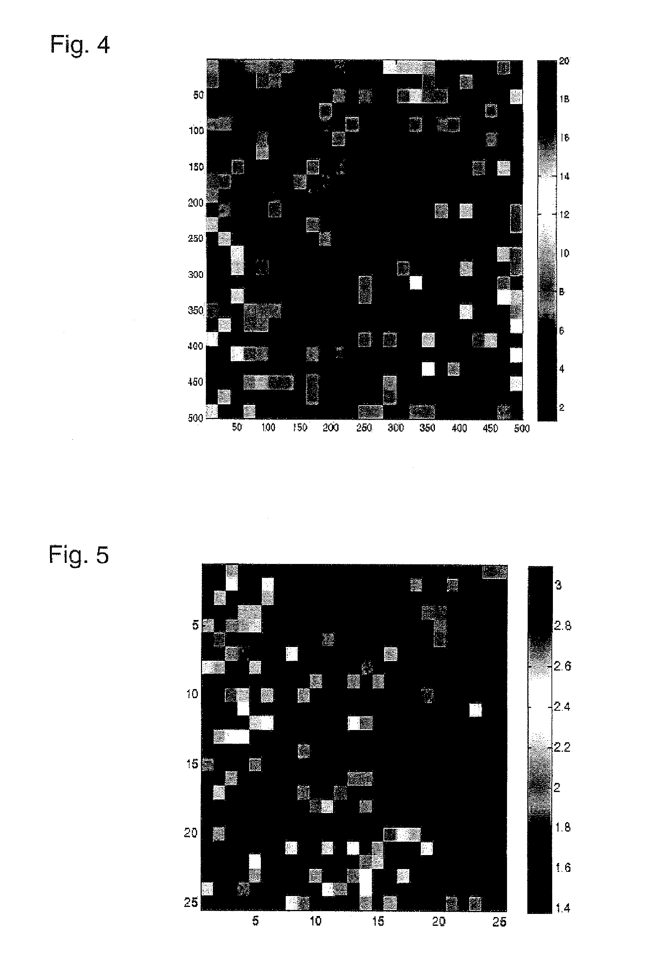

Es hat sich gezeigt, dass mit der Verwendung solcher Local Binary Patterns (LBPs) nur eine geringe Korrelation von innerhalb eines Clusters auftretenden Formationstypen und physikalischen Qualitätsparametern erreicht wird, was sich beispielsweise auch aus den Fig. 4 und 5 ergibt. Dabei zeigt die Fig. 4 den einzelnen Knoten einer Selbstorganisierenden Karte (SOM) zugeordnete Aschegehaltswerte, wobei als Feature ein Local Binary Pattern (LBP) gewählt wurde. Fig. 5 zeigt den einzelnen Knoten einer Selbstorganisierenden Karte (SOM) zugeordnete Werte für die Dehnung in Längsrichtung, wobei als Feature wieder ein Local Binary Pattern (LBP) gewählt wurde.

Der Erfindung liegt die Aufgabe zugrunde, ein verbessertes Verfahren sowie eine verbesserte Vorrichtung der eingangs genannten Art zu schaffen, mit denen eine bessere Klassifizierung der Papierstruktur ermöglicht wird, als dies unter Verwendung von Local Binary Patterns (LBPs) der Fall ist. Dabei soll insbesondere auch eine möglichst gute Korrelation mit physikalischen Papiereigenschaften gegeben sein.

Bezüglich des Verfahrens wird diese Aufgabe erfindungsgemäß dadurch gelöst, dass die Berechnung der unterschiedlichen multidimensionalen Features anhand der digitalen Aufnahmen oder Teilbereichen der Aufnahmen auf der Basis wenigstens einer der folgenden Algorithmen erfolgt:

- Relationale Kernfunktion (RKF);
- Phasenbasierende Methode;
- 2-Punkt- oder 3-Punkt-Methode;
- Wavelets.
  Dabei können also einzelne oder auch beliebige Kombinationen von zwei oder mehreren der genannten Algorithmen verwendet werden.

Bevorzugt erfolgt die Analyse der strukturspezifischen Gruppierungen im Featureraum mittels eines insbesondere eine Selbstorganisierende Karte (SOM) umfassenden Klassifikators. Dabei wird der Klassifikator, wie beispielsweise die Selbstorganisierende Karte (SOM), vorteilhafterweise mit einer hinreichend großen Anzahl von Papierproben, die die verschiedenen Formationstypen in einer repräsentativen Menge enthält, trainiert. In dem Klassifikator können verschiedene Formationsbereiche definiert werden, entweder durch Proben, die bereits vor dem Training verschiedenen Klassen zugeordnet werden, oder im Anschluss an das Training.

Zur Klassifikation von neu aufgenommenen Papierproben können diese in dem Klassifikator wie beispielsweise auf der Selbstorganisierenden Karte (SOM) analysiert werden. Dabei kann die Analysierung insbesondere auch online erfolgen.

Bevorzugt werden die digitalen Aufnahmen der Papierproben in einem Archiv abgelegt, wobei deren Koordinaten in dem zuvor trainierten Klassifikator wie beispielsweise der Selbstorganisierenden Karte (SOM) feststellbar sind.

Zu jeder digitalen Aufnahme einer jeweiligen Papierprobe werden zweckmäßigerweise der Zeitpunkt der Aufnahme und wenigstens ein insbesondere im Labor oder online gemessener zugeordneter Qualitätsparameter abgespeichert. Damit kann innerhalb vorgebbarer Zeitintervalle insbesondere auch der zeitliche Verlauf mit dem erfindungsgemäßen Verfahren bestimmter Formationscharakteristika analysiert werden.

Die restlichen Schritte können zumindest im Wesentlichen insbesondere den betreffenden Schritten des aus der WO 2004/023398 A1 bekannten Verfahrens entsprechen.

Relationale Kernfunktionen sind beispielsweise in Schael, M.: "Invariant Texture Classification Using Group Averaging with Relational Kernel Functions" In Texture 2002 the 2nd International Workshop on Texture Analysis and Synthesis, Seiten 129-134, Juni 2002, beschrieben. Diese Veröffentlichung wird somit in den Offenbarungsgehalt der vorliegenden Anmeldung mit eingeschlossen.

Dabei wird zur Berechnung der Relationalen Kernfunktion der Mittelwert der Grauwertdifferenzen δ zweier auf zwei um den Bildpunkt konzentrischen Kreisen auf das reellwertige Intervall [0, 1] abgebildet, mit

$$\text{rel}: I \to [0,1], \text{rel}(\delta) = \begin{cases} 1 & \text{für } \delta < -\dfrac{\varepsilon}{2} \\ \dfrac{1}{2\varepsilon}(\varepsilon - 2\delta), & \text{für } -\dfrac{\varepsilon}{2} \leq \delta \leq \dfrac{\varepsilon}{2} \\ 0 & \text{für } \delta < \dfrac{\varepsilon}{2} \end{cases}$$

Für ε = 0 ist rel(δ) eine Stufenfunktion und invariant bezüglich streng monotoner Grauwerttransformationen. Ist ε > 0, geht diese Invarianz verloren, wobei in diesem Fall allerdings das Merkmal robuster gegenüber Rauschen ist.

Die Phasenbasierende Methode ist beispielsweise in Fehr, J., Burkhardt, H.: "Phase based 3D Texture Features", Proceedings of the 28th Pattern Recognition Symposium of the German Association for Pattern Recognition (DAGM 2006), Berlin, Germany, LNCS, Springer (2006), 263-372, beschrieben. Auch diese Literaturstelle wird hiermit in den Offenbarungsgehalt der vorliegenden Anmeldung mit eingeschlossen.

Grundlage des dieser Phasenbasierenden Methode zugrunde liegenden Algorithmus ist die Darstellung eines Signals im dreidimensionalen Raum auf einer Kugel um einen Punkt des Datensatzes als Summe von Kugelflächenfunktionen. Die Analogie im zweidimensionalen Raum ist die Darstellung des Signals auf einem Kreis. Ein Kreis mit dem Radius r wird für den Winkel φ und das Band I entsprechend der folgenden Beziehung berechnet:

$$S_{lq}(r,\phi) = \begin{cases} e^{-il\phi}, & \text{für } r = |q| \\ 0, & \text{sonst} \end{cases}$$

Zur Merkmalsbildung dienen die bandweisen Relationen der Phasen $S_{lq}$ zwischen zwei verschiedenen konzentrischen Kreisen. Nach der Glättung der Datenreihen jedes Kreises mit einem Gaußfilter wird das invariante Texturmerkmal T berechnet, indem eine allgemeine Kernfunktion f auf die beiden Kreise mit den Radien r1 und r2 angewandt wird:

$$T[f_1] := f_1(S_{lr1}, S_{lr2})$$

Das Merkmal ist invariant bezüglich monotoner Grauwerttransformationen und Rotationen.

Die 2-Punkt- oder 3-Punkt-Methode ist beispielsweise in Ronneberger, O., Fehr, J., Burkhardt, H.: "Voxel-Wise Gray Scale Invariants for Simultaneous Segmentation and Classification", In Proceedings of the 27th DAGM Symposium, in Number 3663 LNCS, Springer, Vienna, Austria (2005), beschrieben. Auch diese Literaturstelle wird entsprechend wieder in den Offenbarungsgehalt der vorliegenden Anmeldung mit eingeschlossen.

Die Grundlage für den Algorithmus dieses Texturmerkmals bilden die so genannten Haar-Integrale. Hier wird eine Invariante der Datenreihe M durch die Integration über eine Transformationsgruppe G wie folgt errechnet: M wird gemäß aller Elemente der Gruppe G transformiert. Auf jedes Ergebnis wird nun die Kernfunktion f angewandt. Das Gruppenmittel A[f](M) erhält man durch eine anschließende Integration:

$$A[f](M) = \int_G f(gM)dg$$

Um den Algorithmus auf ein digitales Bild anwenden zu können, wird anstelle des Integrals eine Summe berechnet.

Für die Merkmalsgewinnung wird die Transformationsgruppe der Rotationen verwendet. Für jeden Bildpunkt wird dafür das Gruppenmittel berechnet. Dabei ist die Wahl der Kernfunktion von Bedeutung. Eine schnelle Berechnung des Haar-Integrals wird ermöglicht durch die Anwendung der so genannten Monte-Carlo-Integration auf eine bestimmte Klasse von Kernfunktionen, der so genannten 2-Punkt-oder auch der so genannten 3-Punkt-Kernfunktionen.

Im Zusammenhang mit den Wavelets dienen die nach einer entsprechenden Wavelet-Transformation des Bildes erhaltenen Wavelet-Koeffizienten als Grundlage für die Bildung eines Featurevektors.

Dabei kann beispielsweise wie folgt vorgegangen werden: Bei Anwendung der diskreten Wavelet-Transformation wird das Bild in zwei Anteile zerlegt. Zum einen erhält man eine angenäherte Version des Bildes, zum anderen die höherfrequenten Details in einer gewählten Richtung. Werden mehrere Richtungen ausgewählt, beispielsweise horizontal, vertikal und diagonal, so erhält man eine angenäherte Version und die Details in den entsprechenden Richtungen. Das angenäherte Bild kann nun wieder auf dieselbe Art und Weise beliebig oft zerlegt werden. Das Texturmerkmal lässt sich anschließend zum Beispiel aus den Mittelwerten und Standardabweichungen der einzelnen Transformierten zusammensetzen.

Aufgrund der erfindungsgemäßen Lösung ist eine genauere Bestimmung der Formation mittels einer automatischen Muster- und Strukturerkennung möglich. Zudem können Werte von Qualitätsparametern, die von der Formation abhängig sind, besser abgeschätzt werden.

Die erfindungsgemäß eingesetzten Algorithmen, welche die Grundlage für die Berechnung der Features bilden, differenzieren die verschiedenen Formationstypen der Papierproben stärker als die bisher üblichen Local Binary Patterns (LBPs). Dies gilt insbesondere für eine Kombination von zwei oder mehreren der erfindungsgemäß herangezogenen Algorithmen. So erreicht man eine deutliche Unterscheidung zwischen den verschiedenen Formationstypen. Dies führt auch zu einer stärkeren Korrelation der physikalischen Qualitätsparameter des Papiers mit der Struktur der Formation.

Erst die erfindungsgemäße Lösung erlaubt somit einerseits eine differenziertere automatische Formationsanalyse und andererseits einen zuverlässigen Rückschluss von der Formation auf die Qualitätsparameter. Dadurch kann von weiteren digitalen Papieraufnahmen auf genau diese Qualitätseigenschaft rückgeschlossen werden.

Bezüglich der Vorrichtung wird die oben angegebene Aufgabe erfindungsgemäß entsprechend dadurch gelöst, dass die Mittel zur Berechnung der unterschiedlichen multidimensionalen Features anhand der digitalen Aufnahmen oder Teilbereichen der Aufnahmen so ausgelegt sind, dass die Berechnung auf der Basis wenigstens eines der folgenden Algorithmen erfolgt:

- Relationale Kernfunktion (RKF);
- Phasenbasierende Methode;
- 2-Punkt- oder 3-Punkt-Methode;
- Wavelets.

Die Erfindung wird im Folgenden anhand von Ausführungsbeispielen unter Bezugnahme auf die Zeichnung näher erläutert; in dieser zeigen:

Fig. 1     eine schematische Darstellung einer bekannten Methode der Extraktion von Features unter Verwendung von Local Binary Patterns (LBPs);

Fig. 2     Beispiele für die Erweiterung des LBP-Operators auf beliebig große Radien;

Fig. 3     das Ergebnis einer bekannten Clusterbildung unter Verwendung von Local Binary Patterns (LBPs);

Fig.4     den einzelnen Knoten einer Selbstorganisierenden Karte (SOM) zugeordnete Aschegehaltswerte, wobei als Feature ein Local Binary Pattern (LBP) gewählt wurde;

Fig. 5     den einzelnen Knoten einer Selbstorganisierenden Karte (SOM) zugeordnete Werte für die Dehnung in Längsrichtung, wobei als Feature wieder ein Local Binary Pattern (LBP) gewählt wurde;

Fig. 6     eine schematische Darstellung einer beispielhaften Anordnung zur Durchführung des erfindungsgemäßen Verfahrens zur Charakterisierung der Formation von Papier;

Fig. 7     eine schematische Darstellung von Beispielkreisen für eine erfindungsgemäße RKF (Relationale Kernfunktion)-Berechnung;

Fig. 8     eine schematische Darstellung einer Wavelet-Dekomposition;

Fig. 9     das Ergebnis einer beispielhaften erfindungsgemäßen Clusterbildung der verschiedenen Formationstypen unter Verwendung der Relationalen Kernfunktion (RKF) zur Berechnung der Featurevektoren;

Fig. 10     den einzelnen Knoten einer Selbstorganisierenden Karte (SOM) zugeordnete Aschegehaltswerte, wobei als Feature beispielsweise die Phasenbasierende Methode gewählt wurde; und

Fig. 11     den einzelnen Knoten einer Selbstorganisierenden Karte (SOM) zugeordnete Werte für die Dehnung in Längsrichtung, wobei als Feature erfindungsgemäß beispielsweise die Relationalen Kernfunktionen (RKF) berechnet wurden.

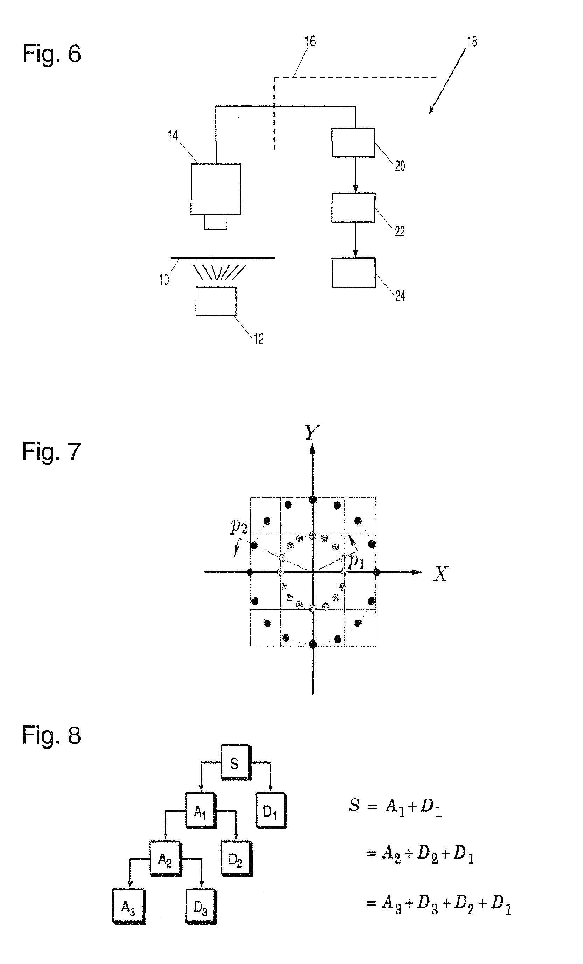

Fig. 6 zeigt in schematischer Darstellung eine beispielhafte Anordnung zur Durchführung des erfindungsgemäßen Verfahrens zur Charakterisierung der Formation von Papier. Dabei wird die Papierbahn oder das Papierblatt 10 mittels einer Lichtquelle 12 beleuchtet, wobei im vorliegenden Fall die Bahn beziehungsweise das Blatt beispielsweise nach dem Durchlichtverfahren beleuchtet wird. Mittels einer digitalen Kamera 14 werden dann digitale Aufnahmen einzelner Proben erstellt, wobei diese Aufnahmen im Labor oder online angefertigt werden können.

Die digitale Kamera 14 ist über eine Schnittstelle 16 mit einer Auswerteeinheit 18 verbunden, die beispielsweise einen Computer umfassen kann.

Die Aufnahme des Bildes wird in einem Speicher 20 der Auswerteeinheit 18 abgelegt. Die Auswerteeinheit 18 umfasst ferner Mittel 22 zur Berechnung des Features oder Texturmerkmals anhand der im Speicher 20 abgelegten Daten. Zudem umfasst die Auswerteeinheit 18 Mittel zur Klassifikation mittels eines Klassifikators aufgrund des berechneten Texturmerkmals.

Das erfindungsgemäße Verfahren kann also grundsätzlich an der Papiermaschine oder im Labor angewandt werden.

Eine bevorzugte beispielhafte Ausführungsform des erfindungsgemäßen Verfahrens umfasst die folgenden Schritte:

1. Training des Klassifikators (SOM):

Die digitale Vorverarbeitung der digitalen Aufnahme kann entweder direkt in der digitalen Kamera oder in der Auswerteeinheit vorgenommen werden. Das
Training einer Selbstorganisierenden Karte wird mit einer genügend großen
Anzahl von Papierproben vorgenommen, die die verschiedenen Formationstypen in repräsentativen Mengen enthält. Dabei können die Proben online oder im Labor genommen werden. Anschließend werden verschiedene Formationsbereiche auf der Karte definiert.

2. Klassifikation von neuen Papierproben:

Neu aufgenommene Papierproben werden auf der Selbstorganisierenden
Karte analysiert. Dadurch wird einerseits die Struktur der Formation bestimmt, andererseits können die Werte der verschiedenen Qualitätsparameter abgeschätzt werden, vorausgesetzt, die Papierprobe ist von derselben Sorte wie die Trainingsproben. Die Analysierung kann online vorgenommen werden, wie sich dies auch beispielsweise aus der Fig. 6 ergibt.

3. Archivfunktion:

Die digitalen Aufnahmen der Papierproben werden in einem Archiv abgelegt.
Durch Applikation der Featurealgorithmen kann die Struktur der Formation mit Hilfe des zuvor trainierten Klassifikators jederzeit bestimmt werden. Zu jeder Aufnahme werden der Zeitpunkt und im Labor gemessene Qualitätsparameter gespeichert. Damit kann der zeitliche Verlauf der Formation innerhalb beliebiger Zeitintervalle analysiert werden.

Fig. 7 zeigt in schematischer Darstellung Beispielkreise für eine erfindungsgemäße RFK-(Relationale Kernfunktion)-Berechnung.

Zur Berechnung der Relationalen Kernfunktion wird der Mittelwert der Grauwertdifferenz $\delta$ zweier auf zwei um den Bildpunkt konzentrischen Kreisen auf das reellwerte Intervall [0,1] abgebildet, mit

$$\text{rel} : I \to [0,1], \text{rel}(\delta) = \begin{cases} 1 & \text{für } \delta < -\dfrac{\varepsilon}{2} \\ \dfrac{1}{2\varepsilon}(\varepsilon - 2\delta), & \text{für } -\dfrac{\varepsilon}{2} \leq \delta \leq \dfrac{\varepsilon}{2} \\ 0 & \text{für } \delta < \dfrac{\varepsilon}{2} \end{cases}$$

Für $\varepsilon = 0$ ist rel($\delta$) eine Stufenfunktion und invariant bezüglich streng monotoner Grauwerttransformationen. Ist $\varepsilon > 0$, geht diese Invarianz verloren, wobei in diesem Fall allerdings das Merkmal robuster gegenüber Rauschen ist.

Fig. 8 zeigt in schematischer Darstellung eine Wavelet-Dekomposition.

Dabei dienen die nach einer Wavelet-Transformation des Bildes erhaltenen Wavelet-Koeffizienten als Grundlage für die Bildung eines Featurevektors.

Hierbei kann, wie anhand der Fig. 8 zu erkennen ist, beispielsweise wie folgt vorgegangen werden:
Bei Anwendung der diskreten Wavelet-Transformation wird das Bild in zwei Anteile zerlegt. Dabei erhält man zum einen eine angenäherte Version des Bildes und zum anderen die höherfrequenten Details in einer gewählten Richtung. Werden mehrere Richtungen ausgewählt, beispielsweise horizontal, vertikal und diagonal, so erhält man eine angenäherte Version und die Details in den entsprechenden Richtungen. Das angenäherte Bild kann nun wieder auf dieselbe Art und Weise beliebig oft zerlegt werden. Das Texturmerkmal lässt sich anschließend zum Beispiel aus den Mittelwerten und Standardabweichungen der einzelnen Transformierten zusammensetzen.

Bei der in der Fig. 8 wiedergegebenen Wavelet-Dekomposition wird also das Signal S in seine Approximation und Details zerlegt. Für ein zweidimensionales Signal werden die Details bevorzugt in den drei Richtungen horizontal, vertikal und diagonal ermittelt. Das derart angenäherte Bild kann wieder zerlegt werden.

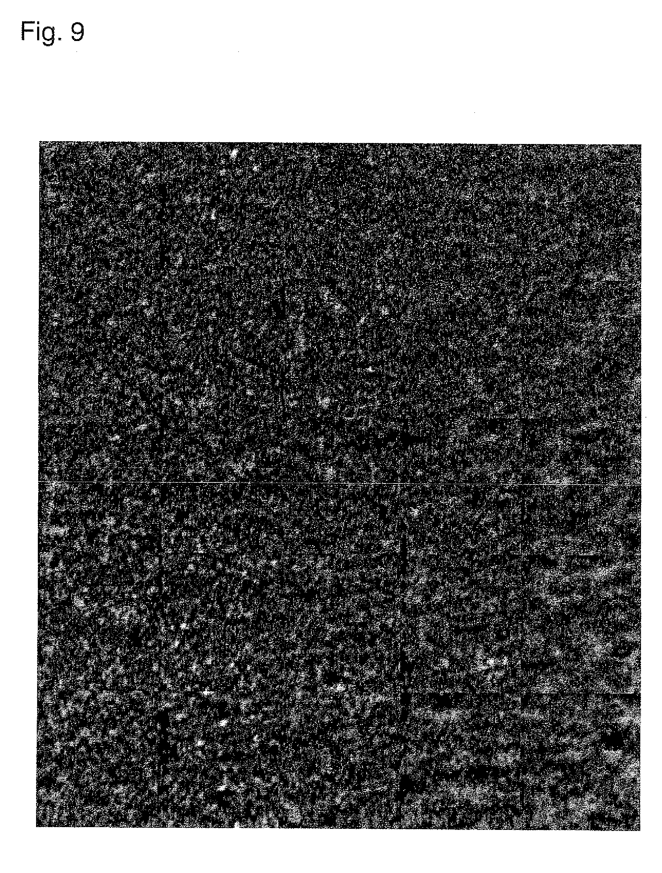

Fig. 9 zeigt das Ergebnis einer beispielhaften erfindungsgemäßen Clusterbildung unter Verwendung der Relationalen Kernfunktion (RKF) zur Berechnung der Featurevektoren.

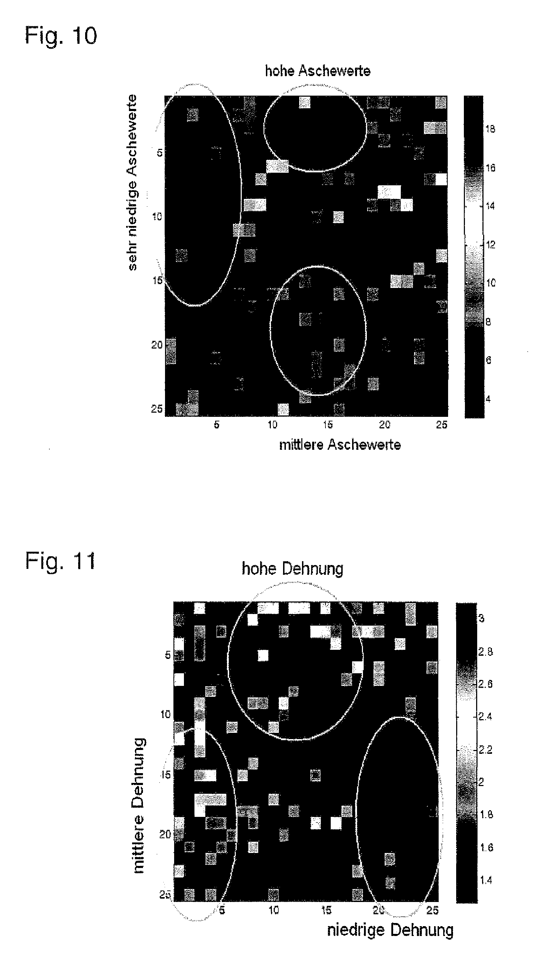

Dabei werden im vorliegenden Fall für eine reduzierte Darstellung einer Selbstorganisierenden Karte (Self Organizing Map) von 625 Knoten der Selbstorganisierenden Karte (SOM) mit jeweils 25 Reihen und Spalten 25 Knoten ausgewählt, die sich in einem regelmäßigen Abstand zueinander befinden. Jeder dargestellte Knoten wird durch eine Papierprobe aus der Trainingsmenge repräsentiert. Rechts unten ist ein Gebiet mit einer grobwolkigen Formation zu erkennen. Links findet man weiße Punkte und in der Mitte, rechts oben, ist die Formation sehr fein und homogen. Als Algorithmus zur Berechnung der Featurevektoren dienten, wie bereits erwähnt, die Relationalen Kernfunktionen (siehe auch Fig. 11).

Fig. 10 zeigt den einzelnen Knoten einer Selbstorganisierenden Karte (SOM) zugeordnete Aschegehaltswerte, wobei als Feature erfindungsgemäß beispielsweise die Phasenbasierende Methode gewählt wurde. Wie anhand dieser Figur 10 zu erkennen ist, ergibt sich eine relativ starke Korrelation der physikalischen Qualitätsparameter des Papiers mit der Struktur der Formation.

Fig. 11 zeigt den einzelnen Knoten einer Selbstorganisierenden Karte (SOM) zugeordnete Werte für die Dehnung in Längsrichtung, wobei als Feature erfindungsgemäß beispielsweise die Relationalen Kernfunktionen (RKF) berechnet wurden. Auch anhand dieser Figur ist wieder zu erkennen, dass die physikalischen Qualitätsparameter stärker mit den Clustern korreliert sind.

**Bezugszeichenliste**

| | |
|---|---|
| 10 | Papierbahn, Papierblatt |
| 12 | Lichtquelle |
| 14 | Digitale Kamera |
| 16 | Schnittstelle |
| 18 | Auswerteeinheit |
| 20 | Speicher |
| 22 | Mittel zur Berechnung des Texturmerkmals |
| 24 | Mittel zur Klassifizierung |

**Patentansprüche**

1. Verfahren zur Charakterisierung der Formation von Papier mittels wenigstens einer Bildverarbeitungsmethode, bei dem im Papier vorhandene Muster und/oder Strukturen automatisch charakterisiert und klassifiziert werden, wobei die automatische Charakterisierung und Klassifizierung die folgenden Schritte umfasst: Erstellen einer Papierprobensammlung, Erstellen einer digitalen Aufnahme von jeder einzelnen Probe, gegebenenfalls ein digitales Vorverarbeiten der digitalen Aufnahme, Berechnen von unterschiedlichen multidimensionalen Features anhand der digitalen Aufnahmen oder Teilbereichen der Aufnahmen, Analysieren von sich bei der Berechnung der unterschiedlichen multidimensionalen Features im Featureraum bildenden strukturspezifischen Gruppierungen und Analysieren der strukturspezifischen Gruppierungen im Featureraum, Projizieren des Ergebnisses der Analyse der strukturspezifischen Gruppierungen in einen im Vergleich zum Featureraum niedrigdimensionalen Raum zur Visualisierung des Analyseergebnisses, und Heranziehen des Analyseergebnisses zur Klassifikation von neu hinzugekommenen Proben,

   **dadurch gekennzeichnet,**

   **dass** die Berechnung der unterschiedlichen multidimensionalen Features anhand der digitalen Aufnahmen oder Teilbereichen der Aufnahmen auf der Basis wenigstens einer der folgenden Algorithmen erfolgt:

   - Relationale Kernfunktion (RKF);
   - Phasenbasierende Methode;
   - 2-Punkt- oder 3-Punkt-Methode;
   - Wavelets.

**2.** Verfahren nach Anspruch 1,
**dadurch gekennzeichnet,**
**dass** die Analyse der strukturspezifischen Gruppierungen im Featureraum mittels eines insbesondere eine Selbstorganisierende Karte (SOM) umfassenden Klassifikators erfolgt.

**3.** Verfahren nach Anspruch 2,
**dadurch gekennzeichnet,**
**dass** der Klassifikator beziehungsweise die Selbstorganisierende Karte (SOM) mit einer hinreichend großen Anzahl von Papierproben, die die verschiedenen Formationstypen in einer repräsentativen Menge enthält, trainiert wird.

**4.** Verfahren nach Anspruch 3,
**dadurch gekennzeichnet,**
**dass** nach dem Trainieren die verschiedenen Formationsbereiche in dem Klassifikator beziehungsweise auf der Selbstorganisierenden Karte (SOM) definiert werden.

**5.** Verfahren nach einem der vorhergehenden Ansprüche,
**dadurch gekennzeichnet,**
**dass** zur Klassifikation von neu aufgenommenen Papierproben diese in dem Klassifikator beziehungsweise auf der Selbstorganisierenden Karte (SOM) analysiert werden.

**6.** Verfahren nach Anspruch 6,
**dadurch gekennzeichnet,**
**dass** die Analysierung online erfolgt.

**7.** Verfahren nach einem der vorhergehenden Ansprüche,
**dadurch gekennzeichnet,**
**dass** die digitalen Aufnahmen der Papierproben in einem Archiv abgelegt werden, wobei deren Koordinaten in dem zuvor trainierten Klassifikator beziehungsweise Selbstorganisierenden Karte (SOM) feststellbar sind.

**8.** Verfahren nach einem der vorhergehenden Ansprüche,
**dadurch gekennzeichnet,**
**dass** zu jeder digitalen Aufnahme einer jeweiligen Papierprobe der Zeitpunkt der Aufnahme und wenigstens ein insbesondere im Labor gemessener zugeordneter Qualitätsparameter abgespeichert werden.

**9.** Verfahren nach Anspruch 8,
**dadurch gekennzeichnet,**
**dass** innerhalb vorgebbarer Zeitintervalle der zeitliche Verlauf der Formation analysiert wird.

**10.** Vorrichtung zur Charakterisierung der Formation von Papier mittels wenigstens einer Bildverarbeitungsmethode, mit Mitteln (20-24) zur automatischen Charakterisierung und Klassifizierung von im Papier vorhandenen Mustern und/oder Strukturen, die Mittel (22) zur Berechnung von unterschiedlichen multidimensionalen Features anhand von digitalen Aufnahmen oder Teilbereichen solcher Aufnahmen, Mittel (24) zur Analysierung von sich bei der Berechnung der unterschiedlichen multidimensionalen Features im Featureraum bildenden strukturspezifischen Gruppierungen und Mittel zur Analyse der strukturspezifischen Gruppierungen im Featureraum umfassen, sowie mit Mitteln zur Projektion des Ergebnisses der Analyse der strukturspezifischen Gruppierungen in einen im Vergleich zum Featureraum niedrigdimensionalen Raum zur Visualisierung des Analyseergebnisses, insbesondere zur Durchführung des Verfahrens nach einem der vorhergehenden Ansprüche,
**dadurch gekennzeichnet,**
**dass** die Mittel (22) zur Berechnung der unterschiedlichen multidimensionalen Features anhand der digitalen Aufnahmen oder Teilbereichen der Aufnahmen so ausgelegt sind, dass die Berechnung auf der Basis wenigstens eines der folgenden Algorithmen erfolgt:

- Relationale Kernfunktion (RKF);
- Phasenbasierende Methode;
- 2-Punkt- oder 3-Punkt-Methode;
- Wavelets.

Fig. 1

| 5 | 4 | 3 |
|---|---|---|
| 4 | 3 | 1 |
| 2 | 0 | 3 |

| 1 | 1 | 1 |
|---|---|---|
| 1 | | 0 |
| 0 | 0 | 1 |

| 1 | 2 | 4 |
|---|---|---|
| 8 | | 16 |
| 32 | 64 | 128 |

| 1 | 2 | 4 |
|---|---|---|
| 8 | | 0 |
| 0 | 0 | 128 |

$$LBP = 1+2+4+8+128 = 143$$

Fig. 3

Fig. 2

Fig. 4

Fig. 5

Fig. 6

Fig. 7

Fig. 8

$$S = A_1 + D_1$$

$$= A_2 + D_2 + D_1$$

$$= A_3 + D_3 + D_2 + D_1$$

Fig. 9

## Fig. 10

hohe Aschewerte

sehr niedrige Aschewerte

mittlere Aschewerte

## Fig. 11

hohe Dehnung

mittlere Dehnung

niedrige Dehnung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004023398 A1

**In der Beschreibung aufgeführte Nicht-Patentliteratur**

- **Schael, M.** Invariant Texture Classification Using Group Averaging with Relational Kernel Functions. *Texture 2002 the 2nd International Workshop on Texture Analysis and Synthesis,* Juni 2002, 129-134
- Phase based 3D Texture Features. **Fehr, J. ; Burkhardt, H.** Proceedings of the 28th Pattern Recognition Symposium of the German Association for Pattern Recognition. Springer, 2006, 263-372

- Voxel-Wise Gray Scale Invariants for Simultaneous Segmentation and Classification. **Ronneberger, O. ; Fehr, J. ; Burkhardt, H.** Proceedings of the 27th DAGM Symposium, in Number 3663 LNCS. Springer, 2005